(19) Europäisches Patentamt
European Patent Office
Office européen des brevets

(11) **EP 3 518 189 B1**

(12) **EUROPEAN PATENT SPECIFICATION**

(45) Date of publication and mention
of the grant of the patent:
**22.01.2025 Bulletin 2025/04**

(21) Application number: **19153833.9**

(22) Date of filing: **25.01.2019**

(51) International Patent Classification (IPC):
**G07C 13/00** (2006.01)    **H04L 9/00** (2022.01)
**H04L 9/32** (2006.01)

(52) Cooperative Patent Classification (CPC):
**G07C 13/00; H04L 9/3236; H04L 9/50;**
H04L 2209/463

(54) **BLOCKCHAIN-BASED CRYPTOLOGIC BALLOT VERIFICATION**

BLOCKKETTENBASIERTE KRYPTOLOGISCHE STIMMZETTELPRÜFUNG

VÉRIFICATION DE BULLETIN CRYPTOLOGIQUE À BASE DE CHAÎNE DE BLOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2018  RU 2018103253
06.12.2018  US 201816212228**

(43) Date of publication of application:
**31.07.2019  Bulletin 2019/31**

(73) Proprietors:
• **Accenture Global Solutions Limited
Dublin 4 (IE)**
• **DSX Holdings Limited
St Helier JE2 4SU (JE)**

(72) Inventors:
• **IVANOV, Aleksandr Nikolaevich
198260 Saint Petersburg (RU)**

• **KAZENNOV, Aleksei Vladimirovich
198302 Saint Petersburg (RU)**
• **MAVCHUN, Georgii Valerievich
198225 Saint Petersburg (RU)**
• **RYMANOV, Mikhail
London, Greater London W8 5UB (GB)**
• **DE ROOIJ, Peter
London, Greater London W4 1DE (GB)**
• **VELISSARIOS, John
London, Greater London WC1N 3AX (GB)**

(74) Representative: **Wittmann, Ernst-Ulrich
Withers & Rogers LLP
Kaulbachstrasse 114
80802 München (DE)**

(56) References cited:
**WO-A2-2005/093671      CN-A- 107 146 318
US-A1- 2017 289 111**

## Description

<u>Technical Field</u>

This disclosure relates to blockchain-based cryptologic voting.

<u>Background</u>

Rapid advances in electronics and communication technologies, driven by immense customer demand, have resulted in newly emerging complex verifiable ledger systems. Improvements in the hardware and software implementations of the underlying processing for the verifiable ledger systems will increase the security, reliability, and speed of the implementations.

CN107146318 describes a voting system based on virtual currency comprising a registering module, a voting module and a counting module.

<u>Brief Description of the Drawings</u>

Figure 1 shows an example balloting environment.

Figure 2 shows the example balloting environment of Figure 1 with indications of the flow of interaction within the environment.

Figure 3 shows example anonymized cryptologic voting logic.

Figure 4 shows example ballot organization logic.

Figure 5 shows a ballot auditing logic according to an embodiment of the present invention.

Figure 6 shows an example voting logic execution environment.

Figure 7 shows an example organization logic execution environment.

Figure 8 shows an example auditing logic execution environment.

Figure 9 shows an example intermediary balloting environment.

Figure 10 example intermediary vote-value compiling logic

## Detailed Description

Distributed ledger technologies (DLTs), backed by blockchain and other cryptographic structures provide a platform by which transactions may be recorded with protection from post-recording tampering. In balloting systems, including private organization voting (e.g., shareholder voting, member voting, employee voting or other private organization elections), municipal/state/federal elections, legislative voting, surveying, polling, or other question-answer systems DLTs allow for a verifiable record (e.g., a virtual paper trail) including where elections are performed remotely (e.g., over a telecommunications network). Further, digital signatures and other digital identity techniques allow for secure identification of voters, ballot organizers, and/or auditors.

In some cases, implementation on a DLT may allow for non-secret balloting. In some balloting systems, non-secret voting (e.g., submission of an answer in a balloting system) may be practical. For example, in legislative voting or judicial responses the identity of individual voters may be a part of the public record.

In some cases, secret balloting may be implemented on a verifiable DLT record. The techniques and architectures discussed below provide a verifiable DLT record while maintaining anonymity of voters (e.g., via pseudonymity or other obfuscation). The techniques and architectures increase the privacy of verifiable DLT balloting using tokens (e.g., committed tokens, range-proof tokens, voter tokens, organizer tokens, result tokens, validity tokens, or other tokens), identifiers, and/or other cryptographic primitives to hide real voter identities and obscure the content of individual votes. The techniques and architectures increase the security of secret balloting by providing a distributed ledger (e.g., backed by a cryptographic structure) that may be audited by nodes under the control voters, organizers, and/or third parties. Thus, balloting done in accord with the techniques and architectures may be later verified for accuracy and validity by stakeholders. Invalid or tampered results may be rejected. In some cases, auditors may record their certifications of the vote to the DLT record further increasing the security and confidence in the balloting system. The techniques and architectures increase the efficiency and flexibility of secret balloting by using one or more of the aforementioned cryptographic primitives and/or cryptographic structures which may operate in localized or networked computer environments. Accordingly, environments implementing example implementations provide for increased efficiency by preserving secrecy of ballots and secure identity without necessarily requiring physical travel or gathering of the parties involved in the balloting. In sum, the discussed techniques and architectures (including tokens, identifiers, distributed ledger, and cryptographic structures) provide technical solutions to the technical problems of increasing the privacy, security, efficiency, and flexibility of balloting systems. Accordingly, the discussed techniques and architectures provide improvements over existing market solutions.

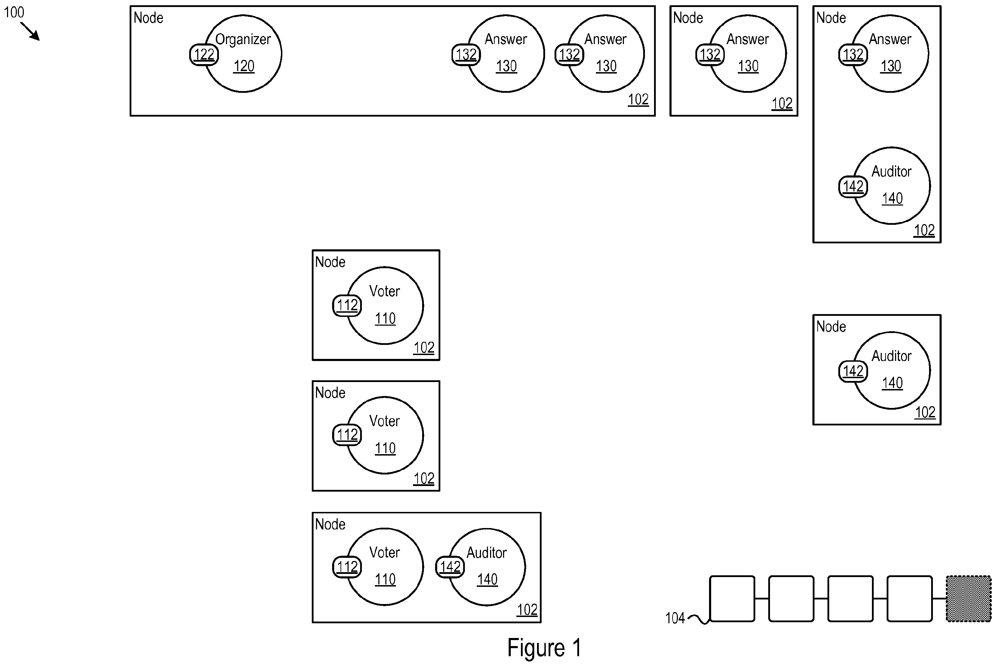

Figure 1 shows an example balloting environment 100. In the example environment 100 nodes 102 store (e.g., in whole or in part) a DLT record 104, such as distributed ledger stored as a blockchain or other cryptographic structure, in memory. The nodes 102 may form a distributed network by redundantly storing the DLT record 104 and achieving consensus regarding transactions and updates posted to the DLT record. Various sequencing consensus mechanisms and/or DLT architectures may be used (e.g., Bitcoin, Ethereum, or other DLT environments). In some cases, a node may hold information on a state of the DLT record relevant to the node's transactions, the node may not necessarily store portions of the DLT record beyond the relevant information

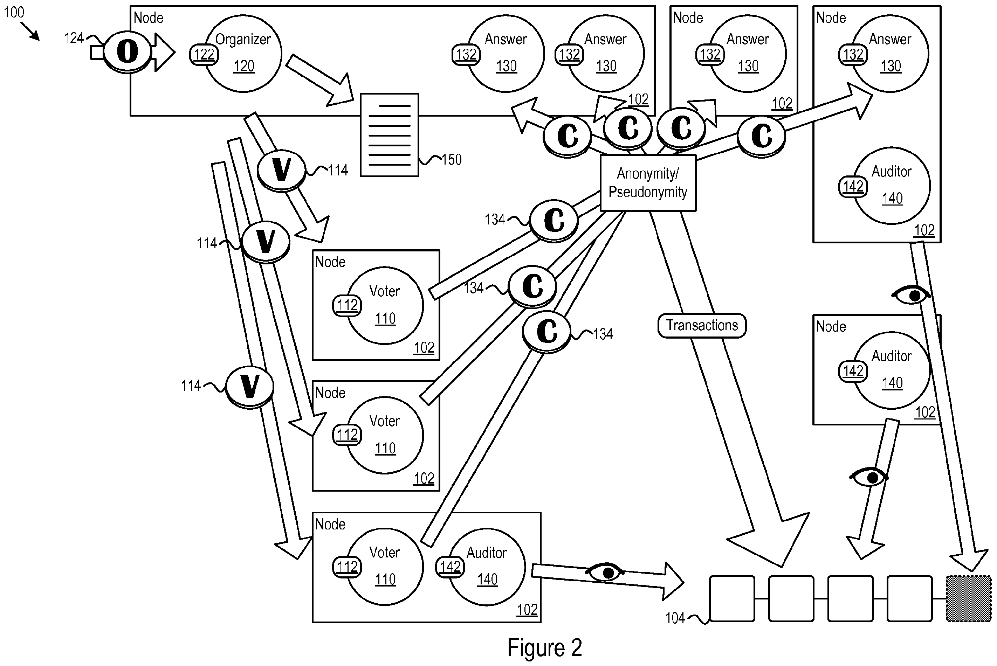

Figure 2 shows the example balloting environment 100 along with indications of the flow of tokens, data, and interactions within the example balloting environment 100. The flow of tokens is shown among the nodes. However, in various implementations, the flow of tokens may be implemented through transaction recorded on the DLT record. Accordingly, a node may not necessarily pass a physical token or data representation to another node, but may record a passage of control/ownership of the token to a DLT record. A cryptographic structure may include data groupings, such as blocks, that are linked to others of the data groupings via cryptographic primitives, such as hashes. For example, in a blockchain, a series of blocks may be linked and protected from data tamper by the blocks in the series that include hashes to the previous blocks in the series. Cryptographic primitives may include hashes, commitments, certificates, signatures, keys, identifiers, ciphers, state inputs, or other cryptographic entities that may provide secure identity, data integrity, data obfuscation, or other security features.

The nodes 102 may transact on the DLT record 104 on the behalf of one or more roles (e.g., voters 110, organizers 120, answers 130, auditors 140, and/or other roles). The nodes 102 may adopt one or more roles via identifiers (e.g., voter identifiers 112, organizer identifiers 122, answer identifiers 132, auditor identifiers 142, and other identifiers). In some cases, a role may be adopted by a node without any particular identifier, for example a node may, in some cases, assume an auditor role without pre-designated identifier. In some cases, a node acting in an auditor capacity may provide an identifier to distinguish from other auditor nodes or other participating nodes. The identifiers may include public keys (e.g., for use in asymmetric encryption algorithms) associated with individual members of the various roles.

A node 102 may act within a role, e.g., as a voter 110, organizer 120, answer 130, auditor 140, or other role, based on virtually any authority system for assigning roles or authentication of logon credentials. For example, an organizer may self-assign the organizer role and then designate voters and answers. In the example, auditors may include volunteer participants and may self-assign. Other configurations may be used. A node may access private keys for a role (e.g., paired to public keys for the role) upon grant of access based on role assignment/logon.

The organizer 120 may establish a ballot 150, e.g., a set of answers 130 with answer identifiers 132, an organizer token 124 holding the vote-value for the ballot 150. In various implementations discussed throughout the disclosure, a ballot, e.g., through its digital structure, may include a set of allowed answers for a vote and define rules for a valid vote. The organizer may designate voters 110. The organizer may distribute the established vote-value in the organizer token 124 to the voters via voter tokens 114. In various implementations throughout the disclosure, a voter token may include a data structure that uses cryptographic primitives to transfer vote value to a voter. The voter token may be recorded within a voter transaction.

The voters 110 may receive the voter tokens 114. The voters 110 may distribute the vote-value in the voter tokens to the answers 130. In some cases, the vote-value in voter tokens may be binary (e.g., yes/no), integer (e.g., n votes), or fractional (e.g., votes may be split accord with decimal values). In some cases, vote-value transfers may be confined to a specific range. For example, the organizer 120 may configure a ballot 150 such that negative vote-values are disallowed to prevent a voter from conferring useless negative vote-value to one answer thereby increasing the vote-value that voter may confer to another answer.

Voters may send vote-value to answers using committed tokens 134. In various implementations throughout the disclosure, committed tokens may contain a cryptographic commitment to the vote-value conferred in the committed token. The commitment does not reveal the vote-value. However, any later revealed vote-value may be compared against the commitment. For example, the commitment algorithm may be applied to the revealed vote-value to recreate the commitment in the committed token. If the recreated committed value does not match, the committed value in the committed token the reveal vote-value can be identified as invalid.

To obfuscate which answers the voter confer vote-value, the voters may also confer null vote-value (e.g., zero or otherwise valueless vote-value) to answers. For example, a voter 110 may outwardly appear to send a token to every answer. However, some portion of the tokens sent may be null tokens. This may frustrate attempts to determine a particular voter's answer selections by monitoring which answers 130 received tokens from the voter.

In some implementations, homomorphic commitments may be used within the committed tokens. Homomorphic commitments have the property that the sum of the commitment is equal to the commitment of the sum. Homomorphic commitments may support aggregate vote-value verification. For example, an auditor 140 may check that the sum of the tokens received by the answers 130 is equal to the sum of tokens sent by the voters 110. This check by the auditor 140 may be done without reliance on knowledge of the individual votes of the voters 110.

The token transfers (e.g., from the organizers 120 to the voters 110 and from the voters 110 to the answers may be recorded on the DLT record 104 to preserve the integrity of the transactions for later verification and to create an immutable (e.g., functionally immutable) virtual paper trail. For example, without cooperation from at least a large minority (e.g., one third, one half, or other portion depending on the consensus procedure used with the DLT) of participating nodes, the DLT record cannot be changed without creating inconsistences with data-integrity cryptographic primitives (e.g., hashes, checksums, or other data integrity protecting primitives). Further, without universal cooperation, evidence of a DLT fork may be maintained by nodes. Thus, attempts to surreptitiously change voting results stored on a DLT record may be frustrated by the constraints against any one node making changes to a DLT record.

Nodes 102 may perform multiple roles simultaneously. For example, two separate identities (e.g., a vote and an organizer) may be served by a single node. Further, particular identities may serve multiple roles. For example, an organizer may be a voter and/or answer. Auditors may also be voters, organizers, or answers. Other combinations are possible.

Additionally or alternatively, roles may be executed by non-participant nodes. For example, a particular node may not necessarily have write privileges for the ballot system DLT record (e.g., a non-participant node). However, the particular node may represent one or more roles. The particular node may execute the tasks of the roles by requesting DLT recordation from participant nodes. Therefore, a user performing a role may not necessarily need to log on to a node that is a participant in the DLT itself. In an example scenario, a user performing a voter role may log on to a remote terminal and execute votes by sending messages requesting DLT transactions rather than appending the DLT transactions directly by the remote terminal.

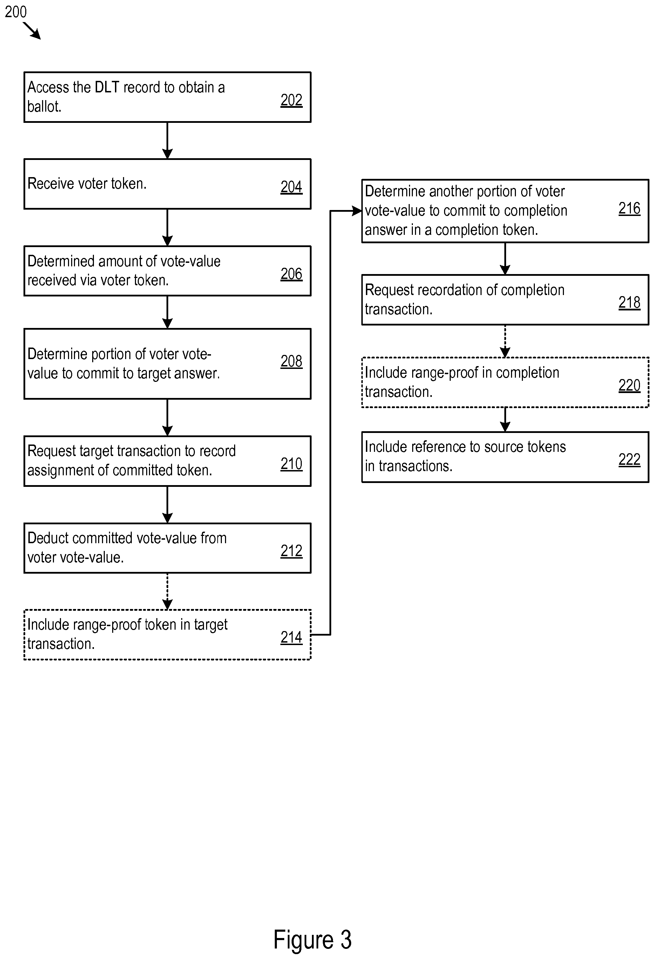

Below, in reference to Figures 3, 4, and 5 example logic to support the operation of voters 110, organizers 120, and auditors 140 is discussed. Referring now to Figure 3, which shows example anonymized cryptologic voting logic (ACVL 200). The ACVL 200 may be implemented on circuitry, e.g., cryptologic voting circuitry. The ACVL 200 may access the DLT record 104 to obtain a ballot for which the voter 110 intends to cast a vote (202). The ballot may designate answers 130 by providing answer identifiers 132 for the answers. The answer identifiers may include public keys assigned to the answers 130. The public keys may allow voters to address a committed token 134 to an answer by encrypting the committed token (or portions thereof) with the public key of the answer.

The ACVL 200 may also receive a voter token on behalf of the voter (204). The voter token may be sent by the organizer 120 and addressed to the voter identifier of the voter. Similarly, a public key of the voter may serve as the voter identifier. The ACVL 200 may determine an amount of vote-value conferred to the voter through the voter token (206). Vote-value is the voting power assigned to the voters to implement the ballot. The voters 110 receive vote-value through tokens from the organizer 120. The voters may then assign the received vote-value to one or more answers. The vote-value received by the answers may be totaled to determine the winning answers in accord with conditions for victory setup by the ballot. For example, conditions may include receiving more vote-value (e.g., a plurality of the vote value) than other answers, receiving a majority of the vote-value, exceeding a defined vote value threshold, or other conditions. Further, multiple conditions may be combined.

In response to voter input, the ACVL 200 may determine a portion of the received vote-value to commit to a target answer (208). For example, in a binary vote-value system, the ACVL 200 may commit the entire vote value to the target answer. In an integer system, a discrete sum (which may be less than the entirety) may be committed by the ACVL 200. Once a commitment has be determined, the ACVL 200 may generate a committed token that binds the voter 110 to the determined vote-value commitment. The committed token 134 may implement a cryptographic commitment to bind the voter. As one illustrative example, the committed token 134 may contain a hash of the committed vote-value. In various implementations throughout the disclosure, committed vote-value may include a determined amount of vote-value that is intended to be transferred in a transaction. The vote-value becomes "committed" when the transferring party generates a cryptographic commitment that designates the amount. The cryptographic commitment prevents the transferring party from being able to later claim a different amount was designated for transfer. Accordingly, any party asserting that the vote-value committed by the ACVL 200 is a particular amount can be checked by hashing their asserted amount. If the hashed output does not match the hash in the committed token, the asserted amount is inaccurate. However, other cryptographic primitives may be used to form commitments.

In some implementations, a commitment from the class of homomorphic commitments may be used in place of the hash described above. A homomorphic commitment is a commitment that has the additional property that the sum of two commitments is the commitment of the sum, e.g., Commit(a) + Commit(b) = Commit(a+b).

Examples of such distributions are: a voter distributes its ballots over the answers, or an intermediary distributes its ballots over the voters it represents

One example homomorphic commitment *(C)* may include:

$$C = aA + bB \qquad (\text{Eq.1})$$

where, A is a first point on an elliptic curve (e.g., an amount point) and *B* is a second point on the elliptic curve (e.g., a blinding point). aA is the amount term and *bB* is the blinding term. The factor a is the vote-value. The factor b is a blinding factor that obfuscates the vote-value a. In some cases, *b* may be chosen through random selection (e.g., pseudorandom, random, or other non-deterministic selection). In some implementations, the allowed range for *b* may be large to frustrate attempts to determine committed tokens by determining that larger values C may be more likely to have non-zero vote-value. For example, the range of b may be on the order of the elliptic field size of the curve generated by the function G (see below). B may be determined based on A. In some cases, the B may be related to A via a hash function to frustrate attempts to predict B for all A. For example, B may be determined using:

$$B = P(H(A)) \qquad (\text{Eq.2})$$

where H is a hash function and P is a function that converts the hash outputs of H to points on the elliptic curve. An example hash function may include the SHA256 algorithm. However, other hash functions may be used.

A may be determined using the generation function of the elliptic curve and a shared key *k*. Accordingly, A may be determined by computing:

$$A = G(k) \qquad (\text{Eq.3})$$

The organizer, or ballot organization logic (BOL) 300 on behalf of the organizer, may determine the generation function *G* and the shared key *k*. The organizer 120 may establish *A* and *B* by providing *k* and *G* and allowing participants (e.g., voters 110, answers 130, auditors 140) to compute A and B. The BOL 300 may also designate the hash function *H* and the function *P*.

An example committed token using the above commitment C may include:

$$[\text{CT}] = (C,\ E_i(a),\ E_i(b)) \qquad (\text{Eq.4})$$

where, [CT] is the committed token structure and $E_i$ designates encryption based on the identifier (e.g., a public key) of the recipient of the vote-value. Accordingly, while the second and third fields of the example committed token are in an encrypted form (e.g., a cryptographic form), the committed token publicly binds the voter (or other conferrer of vote-value) to the committed vote value a without disclosing a until $E_i$ (a) is decrypted.

In some cases, to further obfuscate a, a random "salt," s, may be added to a before application to C.

The summation property of homomorphic commitments discussed above may be used by the AVCL in subsequent transfers of vote-value. Once a recipient has received a token, including a commitment on its value a by the sender of the token, and an encrypted vote-value (e.g., the value *a*), the recipient may distribute this token to two or more further recipients. The homomorphic property may be used by the sender to create the commitments to these new recipients' tokens. For example, for a distribution into two parts a1 and a2 (where the values *a1* and *a2* sum up to the value a originally received: a1 + a2 = a) the commitments to *a1* and *a2* sum up to the commitment of a: *C(a1) + C(a2) = C(a1+a2) = C(a)*. Thus, the AVCL may generate a verification sum using the homomorphic property and verify that the sum (e.g., verfication sum) of transferred vote value matches the vote value in the source token(s). In various implementations throughout the disclosure, a verfication sum may include a sum (or information related to the sum) of the vote-value in one or more tokens used to confirm that a valid amount of vote-value was transferred within the summed tokens.

Once the ACVL 200 generates the committed token, the ACVL 200 may request a target transaction to record the assignment of the committed token to the target answer (210). To establish the authenticity of the target transaction, the ACVL 200 may use a cryptographic key associated with the voter identifier of the voter. For example, the voter identifier may include a public key and the cryptographic key may include a private key paired to the public key. The ACVL 200 may establish the authenticity of the target transaction by digitally signing the committed token using the private key.

The ACVL 200 may account for the target transaction by deducting the committed vote value from the voter vote-value received from the voter token (212).

The balloting system, including the ACVL 200, the BOL 300, and the ballot audit logic (BAL) 400, may operate in a variety of different DLT environments. For example, the balloting system may be applied in systems using an unspent outputs transaction model, an account transaction model, or other transaction model. In an example system having an unspent outputs transaction model, the ACVL 200 may generate a rest token (e.g., with the same structure as the committed token) that confers the remainder vote-value, e.g., the voter vote-value with the committed vote-value deducted, back to the voter 110. The rest token may be included in the target transaction. In some cases, where the committed token transfers all remaining vote-value, the rest token may include a token holding a null vote-value. In an example system in an account transaction model, the committed vote-value may be deducted from an account storing the voter vote-value for the voter.

In various implementations, any of the vote-value conferring tokens (e.g., organizer tokens, voter tokens, rest tokens, or other vote-value transferring tokens) may use the structure (e.g., the structure in Equation 4 above or other token structure) and cryptographic primitives used in the committed token discussed above.

The ACVL 200 may include a range-proof token along in the target transaction along with the committed token (214). The range-proof token may be used, e.g., by a node acting in an auditor role, to publicaly establish that the committed value transferred by the committed token falls within a designate range. In some cases, an organizer may designate allowed ranges for vote-value transfers. For example, negative numbers may be disallowed and/or numbers above/below a designated threshold vote-value may be disallowed. The range-proof token may establish that the committed vote-value falls within the range without necessarily publically disclosing the committed vote-value. Information may be considered to be publically disclosed when made accessible without access to one or more secret (e.g., private) cryptographic keys.

Various range proofs may be implemented within the range-proof token. For example, the example range-proof discussed in Russian Patent Application Serial No. 2018103253, filed 29 January 2018, and titled Electronic Voting and Verification in an e-Ballot Voting System may be used. Therein, an example range proof based on Borromean signatures with $(t+1)\log_2(M)$ rings with two keys (L, L') per ring is described. The range proof may establish that the committed value is within the allowed range, e.g., [0, M]. The signatures are also discussed in Maxwell, G. and Poelstra A., Borromean Ring Signatures, 2015, accessible at: https://github.com/- Blockstream/borromean paper/raw/master/borromean draft 0.01 9ade1e49.pdf

A range-proof token including a range proof for a committed value may be included within the same transaction that conveys the committed token. Additionally or alternatively, the range-proof token may be included in a different transaction. In some cases, multiple range proofs may be generated for a single committed token. For example, a first range-proof token may establish that the committed value is within [N, M] and then a second range-proof token may establish that the committed value is within [X, Y] where N, M and X, Y establish different ranges.

To establish the authenticity of the range-proof token, the ACVL may sign the range-proof token use the cryptographic key associated with the voter identifier.

The ACVL 200 may determine another portion of the voter vote-value to commit to a completion answer (216). The ACVL 200 may send tokens to multiple answers to obfuscate which answers the voter 110 selects. In an example scenario, the ACVL 200 may send a committed token to each of the answers (some of which may be null, e.g., a committed token containing a zero-value vote-value) to frustrate attempts to determine the voter's voting pattern by monitoring which answers receive tokens. The ACVL 200 may generate completion committed tokens (e.g., committed tokens generated to complete determined distribution to the answers and/or ensure that multiple answers receive committed tokens from a voter) to ensure that multiple answers receive committed tokens from the voter. In some cases, multiple committed tokens may be transferred in a single transaction. In various implementations throughout the disclosure, designations such as "target" or "completion" may be used for naming convenience to establish a contextual order, but may not necessarily designate a technical distinction. For example, a "target" committed token may be a committed token sent within the course of a vote a "completion" committed token may designated a final or later token sent within the course of a vote. Accordingly, technical features applying to "target" designations may apply equally to "completion" designations.

The ACVL 200 may sign the token and request recordation of a transaction for the completion token (218). The ACVL 200 may include range-proof tokens corresponding to the completion tokens (220). In some cases, such as the example range proof described in Russian Patent Application Serial No. 2018103253, filed 29 January 2018, and titled Electronic Voting and Verification in an e-Ballot Voting System, a single range-proof token may provide range-proofs for multiple tokens.

A homomorphic commitment is implemented, and the ACVL 200 provides a summation token which allows verification based on the property that the sum of the homomorphic commitments is equal to the commitment of the sum.

In various implementations, the ACVL 200 may include a reference to a source token (e.g., the origin of the vote-value to be distributed in the transaction, for example, a voter token 114, rest token, or other token) and the summation token within transactions (222). The summation token in concert with the transferred committed tokens may be analyzed in reference to the source token. Through the analysis, the total vote value in the source token may be compared to the total vote-value transferred by the multiple committed tokens and/or rest tokens in the transaction. If the vote value in the source token matches the transferred vote value, the transaction may be valid. Because the transaction may include rest tokens, a voter 110 (or other role) transferring vote value need not necessarily transfer (e.g., to others) the entire vote-value in the source token to have the vote-value in tokens in the transaction equal to the vote-value in the source token. In other words, the voter 110 may retain vote-value through rest tokens.

In some cases, the summation token may be combined in function with other tokens. For example, summation information may be extracted from the example range proof described in Russian Patent Application Serial No. 2018103253, filed 29 January 2018, and titled Electronic Voting and Verification in an e-Ballot Voting System. Accordingly, range-proof tokens using the example range proof may serve as summation tokens. To verify the committed tokens, the ACVL 200 (or other logic, BOL 300, BAL 400) may sum over the keys $L$ from the example range-proof token. In the example, the sum of the keys $L$ may be equal to the source token when the vote-value transferred by the tokens in the transaction is equal to the vote-value in the source token. The consistency of the keys L with the tokens in the transaction may be verified by executing the range proofs on the tokens. In various implementations throughout the disclosure, summation information may include information that may support the determination of a sum of vote-value for the generation of a verification sum.

In an example transaction, the ACVL 200 may transfer multiple committed tokens (e.g., $n$ committed tokens) with reference to a source token and a range proof. An example structure may include:

$$[\text{Transact}] = [[ST], P[L_1, L'_1; \dots; L_n, L'_n], [CT]_1, \dots, [CT]_n, [RT]] \quad (5)$$

where [ST] is the source token, $P$ is the range-proof token including the keys $L$ and $L'$ for the n committed tokens, and [RT] is a rest token. The verification of the transaction may further include verifying the source token was assigned to the identifier of the requester of the transaction.

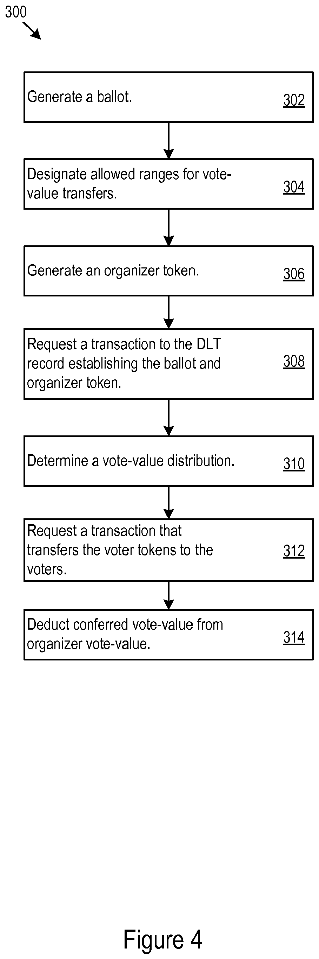

Referring now to Figure 4, example BOL 300 is shown. In various implementations, the BOL 300 may be used to setup ballots on behalf of the organizer role. The BOL 300 may be implemented on circuitry, e.g., ballot organization circuitry. The example BOL 300 may generate a ballot with answers (302). The answers may have corresponding answer identifiers. For example, the ballot may designate individual public keys for the answers.

Voters (e.g., via the ACVL 200) may use the answer identifiers to direct committed tokens assigning vote-value to the answers in accord with their voting preferences and obfuscation scheme.

The BOL 300 may designate an allowed range for vote-value transfers for the ballot 150 (304).

To setup an initial supply of vote-values to distribute to voters, the BOL 300 may generate an organizer token (306). In various implementations throughout the disclosure, an organizer token may include a cryptographic data structure that may be generated to transfer (or initiate transfer through third-party intermediaries) an initial distribution of vote-value to voters.

The BOL 300 may establish the ballot by requesting a transaction recording the ballot 150 to the DLT record (308). Additionally or alternatively, the transaction may establish the organizer token.

In an example, the transaction establishing the ballot (e.g., with n answers) may have the structure:

$$[\text{Transact}] = [[OT]', Bal[AI_1, \dots, AI_n, \{Range\}, \{TType\}, k, G, H]] \quad (6)$$

where [OT]' signifies a non-transfer establishment the organizer token, Bal is the ballot, $AI$ are the answer identifiers, {Range} is a field designating the allowed range for vote-value transfers, {TType} is a field designating allowed token types (e.g., binary, integer, decimal, or other vote types), k is the key for generation of the amount point, G is the generation function for the elliptic curve, and H is the hash function for generation of the blinding point from the amount point. In some cases, the BOL 300 may digitally sign the ballot, for example, using a private key associated with a public key established by the BOL 300 as the organizer identifier.

In some cases, the ballot may further designate voter identifiers for allowed voters for the ballot.

In some cases, the BOL 300 may designate voters through the transfer of vote-value via voter tokens. In other words, the reception of vote-value at a particular identifier entitles a vote. In some implementations, the system may disallow answers from retransferring (e.g., as second-round voters) vote-value received from voters in committed tokens. In other words, committed tokens would not be valid source tokens. For example, vote-value in organizer tokens, voter tokens, and rest tokens may be retransferred after receipt, but vote-value in committed token may be disallowed for retransfer. Further, the organizer may use one or more intermediaries to distribute vote-value to the voters. For example, the organizer may transfer vote-value to an intermediary which may transfer that vote-value (or a portion thereof) to a voter. Multiple layers of intermediaries may be used. In some implementations, any token, including committed tokens, containing vote-value may act as a source token. Received vote-value may be passed among the voters and answers until the election ends.

In various implementations, the election may be ended in response to an event (e.g., a vote-value threshold achieved by an answer, a request from an organizer or other role, a final voter casting a vote, or other event) or at a designated time. The BOL 300 may establish conditions for ending the vote within the ballot.

The BOL 300 may determine a vote-value distribution (310). In various implementations throughout the disclosure, the vote-value distribution may detail the quantity of vote-value that may be transferred the individual voters.

The BOL 300 may distribute the vote-value, e.g., in accord with the vote-value distributions, to voters by requesting a transaction transferring voter tokens to the voters (312). The vote-value conferred to the voters (e.g., conferred vote-value) may be deducted from the organizer vote-value established by the organizer token

(314). The transaction may further transfer a rest token back to the organizer, which may allow the organizer to advance to a voter role or continue to distribute vote-value to voters with the remaining vote-value in the rest token.

In an example, the transaction transferring the voter tokens (e.g., *n* voter tokens) may have the structure:

$$[\text{Transact}] = [[OT], [VT]_1, \ldots, [VT]_n, [RT]] \qquad (7)$$

where [OT] is the organizer token (e.g., the source token), [VT] are the voter tokens, and [RT] is a rest token. Although not shown, the transaction may further include a summation token and/or range-proof tokens to support verification.

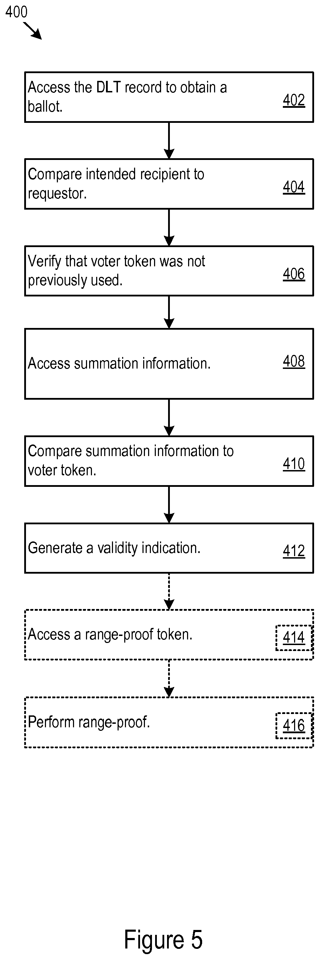

Referring now to Figure 5, BAL 400 according to an embodiment of the present invention is shown. is shown. In various implementations, the BAL 400 may be used to audit transactions related to ballots on behalf of the auditor role. The BAL 400 is implemented on circuitry including ballot auditing circuitry. The BAL 400, e.g., through its operation, may increase the security and accuracy of a balloting system via technical solutions. The BAL 400 may verify transactions for accuracy and integrity using analysis and, in some cases, recordation of cryptographic primitives and structures.

Referring now to the operation of the BAL 400, the BAL accesses a ballot recorded on one or more DLT records. For example, the BAL 400 may access a ballot previously setup by the BOL 300 on behalf of an organizer (402). The BAL 400 accesses a voter transaction for verification. According to the present invention, a voter transaction includes a DLT record of the transfer of a vote-value. The voter transaction includes one or more committed tokens and optionally other tokens, such as range-proof tokens, rest tokens and/or summation tokens. The voter transaction references a voter token and optionally a rest token that may serve as the source token for the voter transaction. The BAL 400 accesses the voter token, e.g., from an organizer transaction that originally conferred the voter token. The verification may be applied to virtually any transaction recorded on the DLT. Accordingly, the BAL 400 may verify individual transactions and/or entire voting processes.

The BAL 400 may compare the intended recipient of the voter token to the identifier of the voter that requested the voter transaction (404). Through the comparison, the BAL 400 may confirm that the source of the vote-value underlying the voter transaction was owned by the voter that requested the voter transaction. In some cases, this may frustrate attempts to secretly cast votes using vote-value owned by another voter (or other entity).

Additionally or alternatively, the BAL 400 may access the DLT record to verify that the voter token has not be previously used in another voter transaction

(406). In other words, the BAL 400 may verify that the voter token is not "double spent."

The BAL 400 accesses summation information for the committed tokens within the voter transaction (408). For example, the BAL 400 may access a summation token (or other token usable as a summation token, such as, as a range-proof token based on the example range-proof discussed above).

The BAL 400 compares the summation information to the voter token (or other source token) (410). The BAL 400 uses the comparison to determine whether the vote-value transferred (e.g., via committed tokens and/or rest tokens) in the voter transaction matches the voter vote-value in the voter token. The BAL 400 may also verify other transaction types (e.g., organizer transactions) using the above discussed logic.

Responsive to the determining whether a match is present, the BAL 400 generates a validity indication for the voter transaction (412). In various implementations throughout the disclosure, the validity indication may confirm valid voter transactions and/or mark invalid transactions. In some cases, generating a validity indication, which may , for example, include a cryptographic primitive such as a digital signature signing a data indication that a particular vote (or individual voter transaction within a vote) is valid, may be accompanied by sending the validity indication to the voter that requested the voter transaction and/or the organizer. In some cases, the BAL 400 may send the validity indication to a selection of and/or all participants (e.g., a broadcast or multicast) in the vote.

In various implementations, the validity indication may be recorded to the DLT record as a validity token. The validity token may include a reference to the voter transaction and the validity indication. In some cases, the validity token may be digitally signed by the BAL 400 on behalf of the auditor. The more distinct auditors that agree on a sign voter tokens indicating validity/non-validity of a voter transaction - the more likely that the conclusion of the auditors is correct and reliable.

In some implementations, that voter may have an opportunity to correct an invalid transaction responsive to an indication of non-validity. For example, corrections may be allowed before the election is ended. The ACVL 200 may request a new transaction that references the old transaction. The new transaction may redistribute the voter token (or other source token) in a different manner to attempt to achieve validity.

In various implementations, invalid transactions may be ignored. For example, participants may treat operate as if the transaction did not occur. In some cases, transactions dependent on an invalid transaction may also be ignored.

In some implementations, one or more invalid transactions may invalidate an entire election. For example, an organizer may invalidly distribute an organizer token into voter tokens. The voter tokens distributed in this manner may be invalid. Hence, the voters placed using these voter tokens may be invalid. Therefore, an election as a whole may be invalid responsive to an invalid organizer transaction.

In some cases, an election may be invalid based on a threshold number of invalid transactions. For example, if a majority (or other fraction) of the voter transactions are invalid, the entire election may be invalidated. In some cases, the threshold number may be determined based on the results. For example, if the vote-value purportedly transferred in the invalid transactions could have changed the election result, the election may be invalidated.

Additionally or alternatively, the BAL 400 may verify transactions by performing range-proofs (e.g., by accessing range-proof tokens) on the individual tokens transferred by the transactions. The BAL 400 may access a range-proof token (414). The BAL 400 may perform the range-proof (416). In various implementations, the validity token (e.g., generated in 412 above) may include a validity indication based on the range-proof in addition to or in place of the verification based on the summation information.

The ACVL 200, BOL 300, and/or the BAL 400 may be implemented on circuitry present in various execution environments. Figures 5, 6, and 7 show example execution environments for the ACVL 200, BOL 300, and/or the BAL 400. In various implementations, underlying hardware for implementing the execution of any of the ACVL 200, BOL 300, and/or the BAL 400 may be used to implement execution or one more of the others.

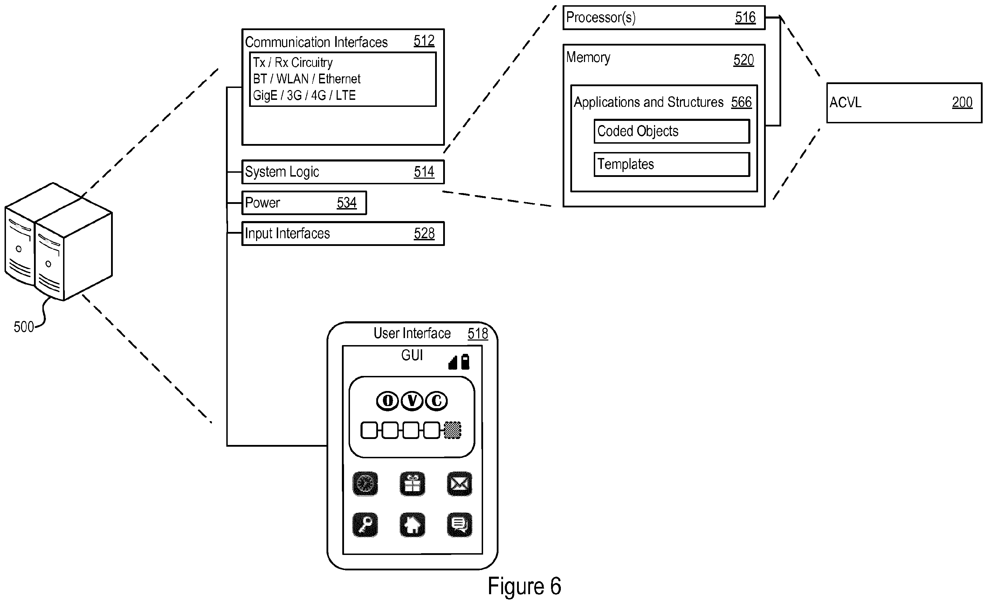

Referring now to Figure 6, an example voting logic execution environment (VLEE) 500 is shown. The example VLEE 500 may serve as a hardware platform for the ACVL 200. The VLEE 500 may include system logic 514. The system logic may include processors 516, memory 520, and/or other circuitry.

The memory 520 along with the processors 516 may support execution of the ACVL 200. The memory 520 may further include applications and structures 566, for example, coded objects, templates, or other structures to support voter token reception, committed token distribution, and generation of tokens.

The VLEE 500 may also include communication interfaces 512, which may support wireless, e.g. Bluetooth, Wi-Fi, WLAN, cellular (4G, LTE/A), and/or wired, Ethernet, Gigabit Ethernet, optical networking protocols. The communication interfaces 512 may also include serial interfaces, such as universal serial bus (USB), serial ATA, IEEE 1394, lighting port, $I^2C$, slimBus, or other serial interfaces. The VLEE 500 may include power functions 534 and various input interfaces 528. The VLEE may also include a user interface 518 that may include human-to-machine interface devices and/or graphical user interfaces (GUI). In various implementations, the system logic 514 may be distributed over multiple physical servers and/or be implemented as a virtual machine.

In some cases, the VLEE 500 may be a specifically defined computational system deployed in a cloud platform. In some cases, the parameters defining the VLEE 500 may be specified in a manifest for cloud deployment. The manifest may be used by an operator to requisition cloud based hardware resources, and then deploy the logical components, for example, ACVL 200, of the VLEE 500 onto the hardware resources. In some cases, a manifest may be stored as a preference file such as a YAML (yet another mark-up language), JavaScript object notation (JSON), or other preference file type.

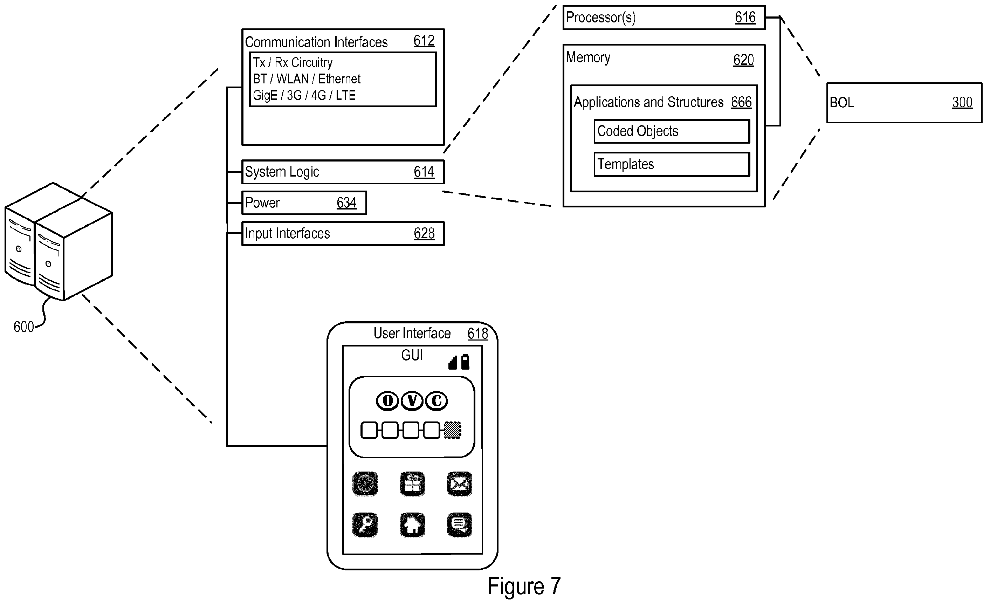

Referring now to Figure 7, an example organization logic execution environment (OLEE) 600 is shown. The example OLEE 600 may serve as a hardware platform for the BOL 300. The OLEE 600 may include system logic 614. The system logic may include processors 616, memory 620, and/or other circuitry.

The memory 620 along with the processors 616 may support execution of the BOL 300. The memory 620 may further include applications and structures 666, for example, coded objects, templates, or other structures to support organizer token establishment, ballot generation/establishment, and generation of tokens.

The OLEE 600 may also include communication interfaces 612, which may support wireless, e.g. Bluetooth, Wi-Fi, WLAN, cellular (4G, LTE/A), and/or wired, Ethernet, Gigabit Ethernet, optical networking protocols. The communication interfaces 612 may also include serial interfaces, such as universal serial bus (USB), serial ATA, IEEE 1394, lighting port, $I^2C$, slimBus, or other serial interfaces. The OLEE 600 may include power functions 634 and various input interfaces 628. The OLEE may also include a user interface 618 that may include human-to-machine interface devices and/or graphical user interfaces (GUI). In various implementations, the system logic 614 may be distributed over multiple physical servers and/or be implemented as a virtual machine.

In some cases, the OLEE 600 may be a specifically defined computational system deployed in a cloud platform. In some cases, the parameters defining the OLEE 600 may be specified in a manifest for cloud deployment. The manifest may be used by an operator to requisition cloud based hardware resources, and then deploy the logical components, for example, BOL 300, of the OLEE 600 onto the hardware resources. In some cases, a manifest may be stored as a preference file such as a YAML (yet another mark-up language), JavaScript object notation (JSON), or other preference file type.

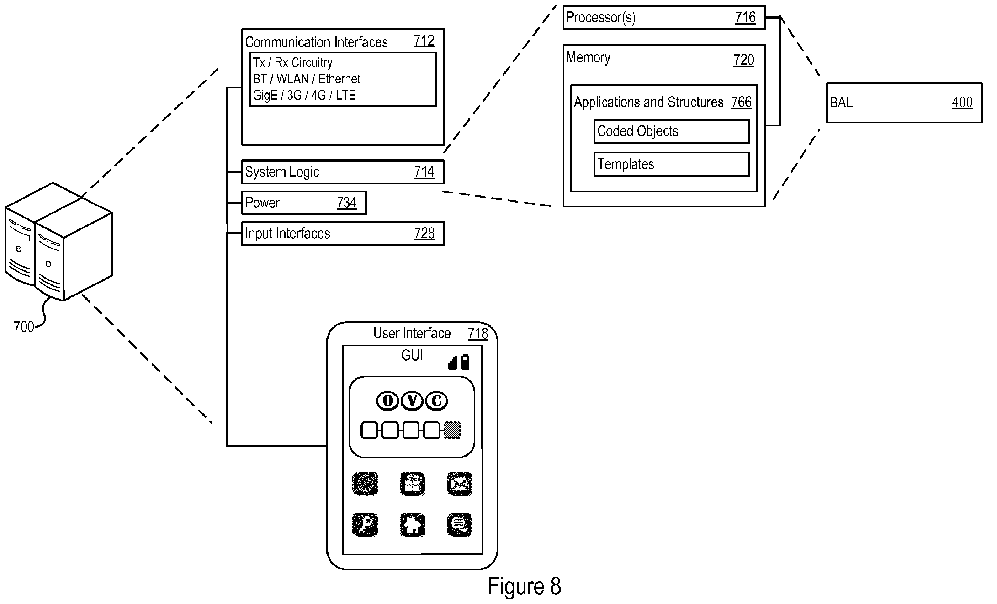

Referring now to Figure 8, an example auditing logic execution environment (ALEE) 700 is shown. The example ALEE 700 may serve as a hardware platform for the BAL 400. The ALEE 700 may include system logic 714. The system logic may include processors 716, memory 720, and/or other circuitry.

The memory 720 along with the processors 716 may support execution of the BAL 400. The memory 720 may further include applications and structures 766, for example, coded objects, templates, or other structures to support transaction verification, range-proof execution, and generation of validity tokens.

The ALEE 700 may also include communication interfaces 712, which may support wireless, e.g. Bluetooth, Wi-Fi, WLAN, cellular (4G, LTE/A), and/or wired, Ethernet, Gigabit Ethernet, optical networking protocols. The communication interfaces 712 may also include serial interfaces, such as universal serial bus (USB), serial ATA, IEEE 1394, lighting port, $I^2C$, slimBus, or other serial interfaces. The ALEE 700 may include power functions 734 and various input interfaces 728. The ALEE may also include a user interface 718 that may include human-to-machine interface devices and/or graphical user interfaces (GUI). In various implementations, the system logic 714 may be distributed over multiple physical servers and/or be implemented as a virtual machine.

In some cases, the ALEE 700 may be a specifically defined computational system deployed in a cloud platform. In some cases, the parameters defining the ALEE 700 may be specified in a manifest for cloud deployment. The manifest may be used by an operator to requisition cloud based hardware resources, and then deploy the logical components, for example, BAL 400, of the ALEE 700 onto the hardware resources. In some cases, a manifest may be stored as a preference file such as a YAML (yet another mark-up language), JavaScript object notation (JSON), or other preference file type.

As discussed above, the underlying hardware of the execution environments may concurrently implement multiple ones of the execution environments. In some cases, concurrent implementation may be used to support operation of a particular node in accord with multiple roles. Further, any of the VLEE 500, OLEE 600, and ALEE 700 may be used to implement the decryption and analysis operations of the answer roles.

Moving now to a discussion of voter anonymity, in various implementations, committed tokens may preserve voter pseudonymity. For example, an answer may be able to determine which voter identities provided committed tokens to that answer. In other words, a voter may be anonymous to general auditors (e.g., general auditors may not necessarily know which answers a particular voter identity sent non-zero vote-value to), but pseudonymous to the answer roles (e.g., the answer may have knowledge of particular vote-value amounts transferred from particular voter identifiers). However, through history analysis, data breach, or the security lapses, a pseudonymous voter identity may be connected to a personal identity of a voter.

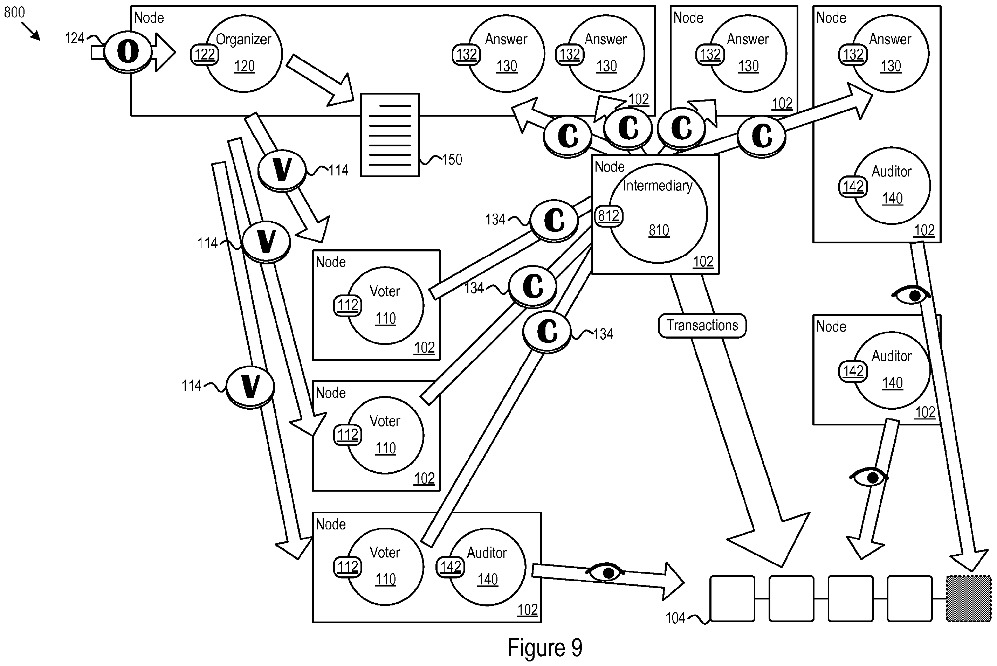

In some implementations, vote-value compiling (e.g., mixing and/or other intermediary role obfuscation) may be used to provide additional protection for voter anonymity against answer roles. Figure 9 shows an example intermediary balloting environment 800. In the intermediary example balloting environment 800, voters 110 send committed tokens to an intermediary 810, e.g., via an intermediary identifier 812. The intermediary 810 may mix or otherwise obfuscate individual vote-value transfers and provide a compiled token with a compiled vote-value transfer to the answers with individual pseudonymous voter identities stripped.

Use of intermediaries may shift anonymity preservation issues from the answer to the intermediary. In some cases, a voter may have control of the intermediary selection. For example, an organizer may select answers, but a voter may freely designate an intermediary (or select an intermediate from a listing of allowed intermediaries). Accordingly. the voter may have more trust in the intermediary than the answer because the voter may control the selection of intermediaries while the organizer designates the answers.

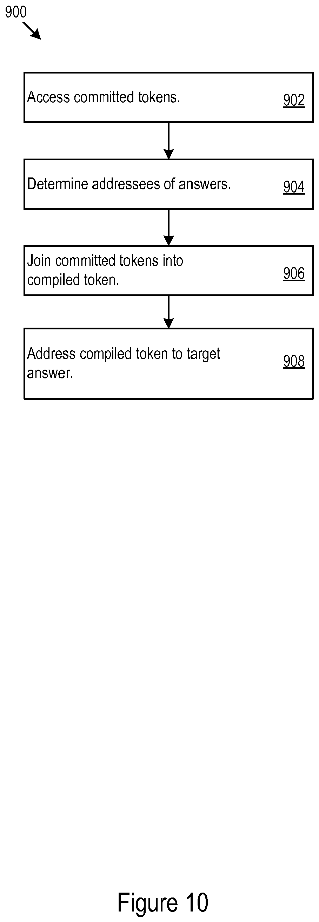

Referring now to Figure 10, example intermediary vote-value compiling logic (IVCL) 900 is shown. The IVCL 900 may access committed tokens transferred to the IVCL's custody (902). The IVCL 900 may determine which of answers the individual committed tokens are targeted to (904). The IVCL 900 may compile the vote-value in committed tokens targeted to a particular answer into to a compiled token. The IVCL 900 may request a compiling transaction, the compiling transaction joining multiple tokens targeted to a particular answer into a single compiled token (906). The IVCL 900 may address the compiled token to the answer identifier (908).

In an example scenario, the IVCL 900 requests a compiling transaction that includes a compiled token addressed to a particular answer. The vote-value in the compiled token may be justified using committed tokens. The IVCL 900 may identify the committed tokens addressed to each answer. The compiling transaction may provide summation information and/or range proofs for the committed tokens. The summation information may be used by auditors to confirm that the vote-value in the committed tokens is the same as the vote-value in the compiled token. The voters, e.g., through the ACVL 200 may certify the compiled transaction by recording signed tokens to DLT record. The signed tokens may confirm that the IVCL 900 correctly identified the addressees of the voters' committed tokens. Confidence in the electronics results may increase with increasing numbers of signed tokens from distinct voters. The intermediary balloting environment may protect voter anonymity with respect to the answers by shifting the pseudonymity to the intermediary. The voters may send committed tokens to multiple answers. Accordingly, identifying a particular token from a voter as being addressed to a particular answer does not necessarily divulge the vote-value committed within the token or that any vote-value was actually committed by the answer.

In various implementations, peer-to-peer mixing may be used. Implementations, such as ValueShuffle, DiceMix, CoinShuffle++ described in Ruffing and Moreno-Sanchez, Mixing Confidential Transactions: Comprehensive Transaction Privacy for Bitcoin, 2017, http://eprint.iacr.org/2017/238.pdf may be used. Therein, ValueShuffle and CoinShuffle++ are described as allowing transaction privacy though mixing in homomorphic commitments. The schemes take advantage of the additive properties of the homomorphic commitments. For example, the schemes provide sums and differences of values used in a transaction without disclosing the sums themselves. In this case, when generating tokens, the ACVL 200 (or other token transferring logic) may provide sums and/or differences of transaction vote-values and blinding values in place of the actual values that are encrypted using the public key of the recipient of the committed token. These sums/differences allow the answer to determine that sum of the vote-value received from multiple tokens, but not necessarily the ability to determine individual vote-values from individual tokens. The schemes may be adapted but substituting Bitcoin values transferred in the transactions with vote-value transfers. Accordingly, using the above-described peer-to-peer mixing schemes anonymity may be preserved against roles other than the voter casting the vote. In peer-to-peer mixing the intermediary may not necessarily be includes to protect anonymity. Hence, non-intermediary balloting environments may be used (e.g., example balloting environment 100).

The methods, devices, architectures, processing, circuitry, and logic described above may be implemented in many different ways and in many different combinations of hardware and software. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HDD), or other magnetic or optical disk; or in or on another machine-readable medium. A product, such as a computer program product, may include a storage medium and instructions stored in or on the medium, and the instructions when executed by the circuitry in a device may cause the device to implement any of the processing described above or illustrated in the drawings.

The implementations may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

Various implementations have been specifically described. However, many other implementations are also possible. For instance, any of the components and functionality in the architecture may be hosted in virtual machines managed by a cloud services provider. That is, while some implementations may be completely localized within a given enterprise, other implementations are completely migrated into the cloud, or are hybrid implementations with mixed local and cloud implementation. Regarding querying devices, the smartphones applications and desktop computers noted above are just particular examples, and other querying devices may be used, including hands-free systems in vehicles, digital personal assistants in smartphones or desktop PCs, hands-free control systems for the home, and many other types of devices.

**Claims**

1. A cryptographic vote auditing method including:
   providing the security and accuracy of a distributed-ledger-based cryptographic ballot system by:

   accessing a ballot recorded on a distributed ledger, the ballot establishing answers (130) having corresponding answer identifiers (132);
   accessing (402) a voter transaction recorded on the distributed ledger, the voter transaction including one or more committed tokens and referencing a first voter token;
   the first voter token including a cryptographic data structure transferring a vote-value from a source token to the voter,
   the committed tokens (134) configured to bind the voters to committed vote-values without revealing the individual committed vote-values by the one or more committed tokens containing a homomorphic cryptographic commitment to the vote-value conferred in the committed token,
   where each of the committed vote-values includes:

   a null, or
   at least a portion of the voter vote-value;

   verifying the validity of the committed tokens (134) by:

   accessing (408) summation information for each of the committed tokens within the voter transaction,
   determining a verification sum, by analyzing the summation information for each of the committed tokens (134), without dependence on knowledge of individual committed vote-values,
   accessing the voter token referenced within the voter transaction, and comparing (410) the verification sum to the first voter vote-value transferred to the voter by the first voter token; and responsive to verifying the validity of the voter transaction, generating (412) a validity indication.

2. The cryptographic vote auditing method of claim 1, further including recording the validity indication to the distributed ledger as a validity token.

3. The cryptographic vote auditing method of claim 1 or claim 2, where comparing the verification sum to the first voter vote-value in the first voter token leads to determining a mismatch between the verification sum and the first voter token, while the first voter token is in the cryptographic form.

4. The cryptographic vote auditing method of claim 3, where the summation information includes information extracted from a range-proof provided within the voter transaction.

5. The cryptographic vote auditing method of claim 3 or claim 4, further including recording the validity indication to the distributed ledger to invalidate the voter transaction.

6. The cryptographic vote auditing method according to any of claims 3 to 5, further including recording the validity indication to the distributed ledger to request a change to the voter transaction to match the verification sum.

7. The cryptographic vote auditing method according to any previous claim, further including:

   accessing an organizer token (124) established on the distributed ledger, the organizer token (124) establishing an organizer vote-value; and
   accessing an organizer transaction recorded on the distributed ledger, the organizer transaction:

   referencing an organizer token (124) designating an organizer vote value;
   conferring voter tokens, the voter tokens including the first voter token, to voters via voter identifiers for the voters using the organizer token (124) as a source token; and

providing organizer summation information for each of the voter tokens.

8. The cryptographic vote auditing method according to any previous claim, where:

the method further includes accessing a range-proof within the voter transaction; and

verifying the validity of the voter transaction further includes comparing the range-proof to a first committed token of the committed tokens (134) to determine whether a first committed vote-value transferred via the first committed token is within an allowed range for the ballot.

9. The cryptographic vote auditing method of claim 8, further including determining that the first committed vote-value is within the allowed range for the ballot by determining that the vote-value is non-negative.

10. The cryptographic vote auditing method according to any previous claim, where verifying the validity of the committed tokens (134) includes comparing the recipient identifier of the first voter token to a voter identifier for a voter (110) that requested the voter transaction.

11. A cryptographic vote auditing system including:

network interface circuitry configured to:

obtain a ballot established on a distributed ledger, the ballot establishing answers (130) with corresponding answer identifiers (132);

requesting a voter transaction including one or more committed tokens and referencing a first voter token;

the first voter token including a cryptographic data structure transferring a vote-value from a source token to the voter,

the committed tokens (134) configured to bind the voters to committed vote-values without revealing the individual committed vote-values by the one or more committed tokens containing a homomorphic cryptographic commitment to the vote-value conferred in the committed token,

where each of the committed vote-values includes:

a null, or

at least a portion of a voter vote-value; and

ballot auditing circuitry in data communication with the network interface circuitry, the ballot auditing circuitry configured to:

access (402) a ballot recorded on the distributed ledger,

access a voter transaction recorded on the distributed ledger,

verify the validity of the committed tokens (134) within the accessed voter transaction by:

accessing (408) summation information for each of the committed tokens within the voter transaction, without dependence on knowledge of individual committed vote-values, determining a verification sum by analyzing the voter summation information for each of the committed tokens (134),

accessing a first voter token referenced within the voter transaction, and comparing (410) the verification sum to the first voter vote-value transferred to the voter by the first voter token; and

responsive to verifying the validity of the voter transaction, generate (412) a validity indication.

12. The cryptographic vote auditing system of claim 11, where the ballot auditing circuitry is further configured to record the validity indication to the distributed ledger as a validity token.

13. The cryptographic vote auditing system of claims 11 or 12, where the ballot auditing circuitry is further configured to compare the verification sum to the first voter vote-value in the first voter token by determining a mismatch between the verification sum and the first voter token, while the first voter token is in the cryptographic form.

14. The cryptographic vote auditing system according to any of claims 11 to 13, where the summation information includes information extracted from a range-proof token provided within the voter transaction.

**Patentansprüche**

1. Kryptografisches Wahlprüfungsverfahren, beinhaltend:
Bereitstellen der Sicherheit und der Genauigkeit eines auf einem verteilten Ledger basierenden kryptografischen Wahlsystems durch:

Zugriff auf einen in einem verteilten Ledger aufgezeichneten Stimmzettel, wobei der Stimmzettel Antworten (130) mit entsprechenden Antwortkennungen (132) festlegt;
Zugriff (402) auf eine Wählertransaktion, die im verteilten Ledger aufgezeichnet ist, wobei die Wählertransaktion ein oder mehrere gebundene Tokens beinhaltet und auf ein erstes Wähler-Token verweist;
wobei das erste Wähler-Token eine kryptografische Datenstruktur beinhaltet, die einen Stimmwert von einem Quell-Token an den Wähler überträgt,
die gebundenen Tokens (134) dafür ausgelegt sind, die Wähler an gebundene Stimmwerte zu binden, ohne die einzelnen gebundenen Stimmwerte durch das eine oder die mehreren gebundenen Tokens offenzulegen, die eine homomorphe kryptografische Bindung an den im gebundenen Token übertragenen Stimmwert enthalten, wobei jeder der gebundenen Stimmwerte beinhaltet:

eine Null, oder
mindestens einen Teil des Wählerstimmwertes;
Verifizieren der Gültigkeit der gebundenen Tokens (134) durch:

Zugriff (408) auf Summierungsinformationen für jedes der gebundenen Tokens innerhalb der Wählertransaktion,
Bestimmen einer Verifizierungssumme durch Analysieren der Summierungsinformationen für jedes der gebundenen Tokens (134), ohne von der Kenntnis der einzelnen gebundenen Stimmwerte abhängig zu sein,
Zugriff auf das Wähler-Token, auf das innerhalb der Wählertransaktion verwiesen wird, und Vergleichen (410) der Verifizierungssumme mit dem ersten Wählerstimmwert, der dem Wähler durch das erste Wähler-Token übertragen wird; und
als Reaktion auf das Verifizieren der Gültigkeit der Wählertransaktion, Erzeugen (412) einer Gültigkeitsangabe.

2. Kryptografisches Wahlprüfungsverfahren nach Anspruch 1, ferner beinhaltend das Aufzeichnen der Gültigkeitsangabe im verteilten Ledger als Gültigkeits-Token.

3. Kryptografisches Wahlprüfungsverfahren nach Anspruch 1 oder Anspruch 2, wobei das Vergleichen der Verifizierungssumme mit dem ersten Wählerstimmwert im ersten Wähler-Token zum Bestimmen einer Nichtübereinstimmung zwischen der Verifizierungssumme und dem ersten Wähler-Token führt, während das erste Wähler-Token in der kryptografischen Form vorliegt.

4. Kryptografisches Wahlprüfungsverfahren nach Anspruch 3, wobei die Summierungsinformationen Informationen beinhalten, die aus einem innerhalb der Wählertransaktion bereitgestellten Bereichsnachweis extrahiert werden.

5. Kryptografisches Wahlprüfungsverfahren nach Anspruch 3 oder Anspruch 4, ferner beinhaltend das Aufzeichnen der Gültigkeitsangabe im verteilten Ledger zum Ungültigmachen der Wählertransaktion.

6. Kryptografisches Wahlprüfungsverfahren nach einem der Ansprüche 3 bis 5, ferner beinhaltend das Aufzeichnen der Gültigkeitsangabe im verteilten Ledger zum Anfordern einer Änderung der Wählertransaktion, damit diese mit der Verifizierungssumme übereinstimmt.

7. Kryptografisches Wahlprüfungsverfahren nach einem der vorhergehenden Ansprüche, ferner beinhaltend:

Zugriff auf ein Organisator-Token (124), das auf dem verteilten Ledger eingerichtet ist, wobei das Organisator-Token (124) einen Organisator-Stimmwert festlegt; und
Zugriff auf eine Organisator-Transaktion, die im verteilten Ledger aufgezeichnet ist, wobei die Organisator-Transaktion folgende Funktionen erfüllt:

Verweisen auf ein Organisator-Token (124), das einen Organisator-Stimmwert bezeichnet;

Vergeben von Wähler-Tokens, wobei die Wähler-Tokens das erste Wähler-Token beinhalten, an Wähler über Wählerkennungen für die Wähler unter Verwendung des Organisator-Tokens (124) als Quell-Token; und

Bereitstellen von Organisator-Summierungsinformationen für jedes der Wähler-Tokens.

8. Kryptografisches Wahlprüfungsverfahren nach einem der vorhergehenden Ansprüche, wobei:
das Verfahren ferner das Zugreifen auf einen Bereichsnachweis innerhalb der Wählertransaktion umfasst; und das Verifizieren der Gültigkeit der Wählertransaktion ferner das Vergleichen des Bereichsnachweises mit einem ersten gebundenen Token der gebundenen Tokens (134) beinhaltet, um zu bestimmen, ob ein erster gebundener Stimmwert, der über das erste gebundene Token übertragen wird, innerhalb eines zulässigen Bereichs für den Stimmzettel liegt.

9. Kryptografisches Wahlprüfungsverfahren nach Anspruch 8, ferner beinhaltend das Bestimmen, dass der erste gebundene Stimmwert innerhalb des zulässigen Bereichs für den Stimmzettel liegt, indem bestimmt wird, dass der Stimmwert nichtnegativ ist.

10. Kryptografisches Wahlprüfungsverfahren nach einem der vorhergehenden Ansprüche, wobei das Verifizieren der Gültigkeit der gebundenen Tokens (134) das Vergleichen der Empfängerkennung des ersten Wähler-Tokens mit einer Wählerkennung für einen Wähler (110) beinhaltet, der die Wählertransaktion angefordert hat.

11. Kryptografisches Wahlprüfungssystem, beinhaltend:
eine Netzwerkschnittstellenschaltung, die für folgende Vorgänge ausgelegt ist:

Erhalten eines in einem verteilten Ledger erstellten Stimmzettels, wobei der Stimmzettel Antworten (130) mit entsprechenden Antwortkennungen (132) festlegt;
Anfordern einer Wählertransaktion, die ein oder mehrere gebundene Tokens beinhaltet und auf ein erstes Wähler-Token verweist;
wobei das erste Wähler-Token eine kryptografische Datenstruktur beinhaltet, die einen Stimmwert von einem Quell-Token an den Wähler überträgt,
die gebundenen Tokens (134) dafür ausgelegt sind, die Wähler an gebundene Stimmwerte zu binden, ohne die einzelnen gebundenen Stimmwerte durch das eine oder die mehreren gebundenen Tokens offenzulegen, die eine homomorphe kryptografische Bindung an den im gebundenen Token übertragenen Stimmwert enthalten, wobei jeder der gebundenen Stimmwerte beinhaltet:

eine Null, oder
mindestens einen Teil eines Wählerstimmwertes; und
eine Stimmzettelprüfungsschaltung in Datenkommunikation mit der Netzwerkschnittstellenschaltung, wobei die Stimmzettelprüfungsschaltung für folgende Vorgänge ausgelegt ist:

Zugriff (402) auf einen im verteilten Ledger gespeicherten Stimmzettel,
Zugriff auf eine im verteilten Ledger aufgezeichnete Wählertransaktion,
Verifizieren der Gültigkeit der gebundenen Tokens (134) innerhalb der Wählertransaktion, auf die zugegriffen wird, durch:

Zugriff (408) auf Summierungsinformationen für jedes der gebundenen Tokens innerhalb der Wählertransaktion,
ohne von der Kenntnis einzelner gebundener Stimmwerte abhängig zu sein, Bestimmen einer Verifizierungssumme durch Analysieren der Wähler-Summierungsinformationen für jedes der gebundenen Tokens (134),
Zugriff auf ein erstes Wähler-Token, auf das innerhalb der Wählertransaktion verwiesen wird, und
Vergleichen (410) der Verifizierungssumme mit dem ersten Wählerstimmwert, der an den Wähler durch das erste Wähler-Token übertragen wird; und
als Reaktion auf das Verifizieren der Gültigkeit der Wählertransaktion, Erzeugen (412) einer Gültigkeitsangabe.

12. Kryptografisches Wahlprüfungssystem nach Anspruch 11, wobei die Stimmzettelprüfungsschaltung ferner dafür ausgelegt ist, die Gültigkeitsangabe im verteilten Ledger als Gültigkeits-Token aufzuzeichnen.

**13.** Kryptografisches Wahlprüfungssystem nach Anspruch 11 oder 12, wobei die Stimmzettelprüfungsschaltung ferner dafür ausgelegt ist, die Verifizierungssumme mit dem ersten Wählerstimmwert im ersten Wähler-Token zu vergleichen, indem sie eine Nichtübereinstimmung zwischen der Verifizierungssumme und dem ersten Wähler-Token bestimmt, während das erste Wähler-Token in der kryptografischen Form vorliegt.

**14.** Kryptografisches Wahlprüfungssystem nach einem der Ansprüche 11 bis 13, wobei die Summierungsinformationen Informationen beinhalten, die aus einem Bereichsnachweis-Token extrahiert wird, das innerhalb der Wählertransaktion bereitgestellt wird.

**Revendications**

**1.** Procédé de vérification de vote cryptographique incluant :
la garantie de la sécurité et la précision d'un système de scrutin cryptographique basé sur un registre distribué par :

accès à un scrutin enregistré sur un registre distribué, le scrutin établissant des réponses (130) ayant des identifiants de réponse correspondants (132) ;
accès (402) à une transaction de votant enregistrée sur le registre distribué, la transaction de votant incluant un ou plusieurs jetons engagés et se référant à un premier jeton de votant ;
le premier jeton de votant incluant une structure de données cryptographique transférant une valeur de vote d'un jeton source au votant,
les jetons engagés (134) configurés pour lier les votants à des valeurs de vote engagées sans révéler les valeurs de vote engagées individuelles grâce aux un ou plusieurs jetons engagés contenant un engagement cryptographique homomorphe pour la valeur de vote conférée dans le jeton engagé,
chacune des valeurs de vote engagées incluant :

une valeur nulle, ou
au moins une partie de la valeur de vote de votant ;
la vérification de la validité des jetons engagés (134) par :

accès (408) à des informations de sommation pour chacun des jetons engagés dans la transaction de votant,
détermination d'une somme de vérification, par analyse des informations de sommation pour chacun des jetons engagés (134), sans dépendance à la connaissance des valeurs de vote engagées individuelles,
accès au jeton de votant référencé dans la transaction de votant, et comparaison (410) de la somme de vérification à la première valeur de vote de votant transférée au votant par le premier jeton de votant ; et
en réponse à la vérification de la validité de la transaction de votant, génération (412) d'une indication de validité.

**2.** Procédé de vérification de vote cryptographique selon la revendication 1, comprenant en outre l'enregistrement de l'indication de validité dans le registre distribué en tant que jeton de validité.

**3.** Procédé de vérification de vote cryptographique selon la revendication 1 ou la revendication 2, dans lequel la comparaison de la somme de vérification à la première valeur de vote de votant dans le premier jeton de votant mène à déterminer une non-concordance entre la somme de vérification et le premier jeton de votant, tandis que le premier jeton de votant est sous la forme cryptographique.

**4.** Procédé de vérification de vote cryptographique selon la revendication 3, dans lequel les informations de sommation incluent des informations extraites d'une preuve de portée fournie dans la transaction de votant.

**5.** Procédé de vérification de vote cryptographique selon la revendication 3 ou la revendication 4, comprenant en outre l'enregistrement de l'indication de validité dans le registre distribué pour invalider la transaction de votant.

**6.** Procédé de vérification de vote cryptographique selon l'une quelconque des revendications 3 à 5, comprenant en outre l'enregistrement de l'indication de validité dans le registre distribué pour demander une modification de la transaction de votant pour qu'elle corresponde à la somme de vérification.

7. Procédé de vérification de vote cryptographique selon l'une quelconque des revendications précédentes, comprenant en outre :

l'accès à un jeton d'organisateur (124) établi sur le registre distribué, le jeton d'organisateur (124) établissant une valeur de vote d'organisateur ; et
l'accès à une transaction d'organisateur enregistrée sur le registre distribué, la transaction d'organisateur :

se référant à un jeton d'organisateur (124) désignant une valeur de vote d'organisateur ;
attribuant des jetons de votant, lesquels jetons de votant incluant le premier jeton de votant, à des votants via des identifiants de votant pour les votants utilisant le jeton d'organisateur (124) en tant que jeton de source ; et
fournissant des informations de sommation d'organisateur pour chacun des jetons de votant.

8. Procédé de vérification de vote cryptographique selon l'une quelconque des revendications précédentes, dans lequel :

le procédé comprend en outre l'accès à une preuve de portée dans la transaction de votant ; et
la vérification de la validité de la transaction de votant comprend en outre la comparaison de la preuve de portée à un premier jeton engagé des jetons engagés (134) pour déterminer si une première valeur de vote engagée transférée via le premier jeton engagé se trouve à une portée autorisée pour le scrutin.

9. Procédé de vérification de vote cryptographique selon la revendication 8, comprenant en outre la détermination du fait que la première valeur de vote engagée se trouve dans la portée autorisée pour le scrutin par détermination du fait que la valeur de vote est non négative.

10. Procédé de vérification de vote cryptographique selon l'une quelconque des revendications précédentes, dans lequel la vérification de la validité des jetons engagés (134) comprend la comparaison de l'identifiant du destinataire du premier jeton de votant à l'identifiant de votant d'un votant (110) qui a demandé la transaction de votant.

11. Système de vérification de vote cryptographique incluant :
des circuits d'interface de réseau configurés pour :

obtenir un scrutin établi sur un registre distribué, le scrutin établissant des réponses (130) ayant des identifiants de réponse correspondants (132) ;
demander une transaction de votant incluant un ou plusieurs jetons engagés et se référer à un premier jeton de votant ;
le premier jeton de votant incluant une structure de données cryptographique transférant une valeur de vote d'un jeton source au votant,
les jetons engagés (134) configurés pour lier les votants à des valeurs de vote engagées sans révéler les valeurs de vote engagées individuelles grâce aux un ou plusieurs jetons engagés contenant un engagement cryptographique homomorphe pour la valeur de vote conférée dans le jeton engagé,
chacune des valeurs de vote engagées incluant :

une valeur nulle, ou
au moins une partie d'une valeur de vote de votant ; et
des circuits de vérification de scrutin en communication de données avec les circuits d'interface de réseau, les circuits de vérification de scrutin étant configurés pour :

accéder (402) à un scrutin enregistré sur le registre distribué,
accéder à une transaction de votant enregistrée sur le registre distribué,
vérifier la validité des jetons enregistrés (134) dans la transaction de votant accédé par :

accès (408) à des informations de sommation pour chacun des jetons engagés dans la transaction de votant,
sans dépendance à la connaissance des valeurs de vote engagées individuelles, détermination d'une somme de vérification, par analyse des informations de sommation de votant pour chacun des jetons engagés (134),
accès à un premier jeton de votant référencé dans la transaction de votant, et
comparaison (410) de la somme de vérification à la première valeur de vote de votant transférée au votant par le premier jeton de votant ; et
en réponse à la vérification de la validité de la transaction de votant, génération (412) d'une indication de validité.

12. Système de vérification de vote cryptographique selon la revendication 11, dans lequel les circuits de vérification de scrutin sont en outre configurés pour enregistrer l'indication de validité dans le registre distribué en tant que jeton de validité.

13. Système de vérification de vote cryptographique selon la revendication 11 ou 12, dans lequel le circuit de vérification de scrutin est en outre configuré pour comparer la somme de vérification à la première valeur de vote de votant dans le premier jeton de votant par détermination d'une non-concordance entre la somme de vérification et le premier jeton de votant, tandis que le premier jeton de votant est sous la forme cryptographique.

14. Système de vérification de vote cryptographique selon l'une quelconque des revendications 11 à 13, dans lequel les informations de sommation incluent des informations extraites d'un jeton de preuve de portée fourni dans la transaction de votant.

100

Figure 1

Figure 2

200

Access the DLT record to obtain a ballot. 202

Receive voter token. 204

Determined amount of vote-value received via voter token. 206

Determine portion of voter vote-value to commit to target answer. 208

Request target transaction to record assignment of committed token. 210

Deduct committed vote-value from voter vote-value. 212

Include range-proof token in target transaction. 214

Determine another portion of voter vote-value to commit to completion answer in a completion token. 216

Request recordation of completion transaction. 218

Include range-proof in completion transaction. 220

Include reference to source tokens in transactions. 222

Figure 3

300

```
┌─────────────────────────────────────────────┐
│ Generate a ballot.                     302   │
└─────────────────────────────────────────────┘
                      │
                      ▼
┌─────────────────────────────────────────────┐
│ Designate allowed ranges for vote-          │
│ value transfers.                       304   │
└─────────────────────────────────────────────┘
                      │
                      ▼
┌─────────────────────────────────────────────┐
│ Generate an organizer token.           306   │
└─────────────────────────────────────────────┘
                      │
                      ▼
┌─────────────────────────────────────────────┐
│ Request a transaction to the DLT            │
│ record establishing the ballot and    308   │
│ organizer token.                            │
└─────────────────────────────────────────────┘
                      │
                      ▼
┌─────────────────────────────────────────────┐
│ Determine a vote-value distribution.   310   │
└─────────────────────────────────────────────┘
                      │
                      ▼
┌─────────────────────────────────────────────┐
│ Request a transaction that                  │
│ transfers the voter tokens to the     312   │
│ voters.                                     │
└─────────────────────────────────────────────┘
                      │
                      ▼
┌─────────────────────────────────────────────┐
│ Deduct conferred vote-value from            │
│ organizer vote-value.                 314   │
└─────────────────────────────────────────────┘
```

Figure 4

400

```
┌─────────────────────────────────────┐
│ Access the DLT record to obtain a   │
│ ballot.                    402       │
└─────────────────────────────────────┘
                  │
                  ▼
┌─────────────────────────────────────┐
│ Compare intended recipient to       │
│ requestor.                 404       │
└─────────────────────────────────────┘
                  │
                  ▼
┌─────────────────────────────────────┐
│ Verify that voter token was not     │
│ previously used.           406       │
└─────────────────────────────────────┘
                  │
                  ▼
┌─────────────────────────────────────┐
│                                     │
│ Access summation information. 408    │
│                                     │
└─────────────────────────────────────┘
                  │
                  ▼
┌─────────────────────────────────────┐
│ Compare summation information to    │
│ voter token.               410       │
└─────────────────────────────────────┘
                  │
                  ▼
┌─────────────────────────────────────┐
│ Generate a validity indication. 412  │
└─────────────────────────────────────┘
                  ┊
                  ▼
┌─────────────────────────────────────┐
│ Access a range-proof token.   414   │
└─────────────────────────────────────┘
                  ┊
                  ▼
┌─────────────────────────────────────┐
│ Perform range-proof.          416   │
└─────────────────────────────────────┘
```

Figure 5

Communication Interfaces    512

Tx / Rx Circuitry
BT / WLAN / Ethernet
GigE / 3G / 4G / LTE

System Logic    514

Power    534

Input Interfaces    528

Processor(s)    516

Memory    520

Applications and Structures    566

Coded Objects

Templates

ACVL    200

500

User Interface    518

GUI

User Interface content

Figure 6

EP 3 518 189 B1

Communication Interfaces        612

Tx / Rx Circuitry
BT / WLAN / Ethernet
GigE / 3G / 4G / LTE

System Logic        614

Power        634

Input Interfaces        628

Processor(s)        616

Memory        620

Applications and Structures        666

Coded Objects

Templates

BOL        300

600

User Interface        618

GUI

O V C

Figure 7

Communication Interfaces    712

Tx / Rx Circuitry
BT / WLAN / Ethernet
GigE / 3G / 4G / LTE

System Logic              714

Power         734

Input Interfaces          728

Processor(s)              716

Memory                    720

Applications and Structures  766

Coded Objects

Templates

BAL                       400

User Interface   718

GUI

700

Figure 8

Figure 9

900

| |
|---|
| Access committed tokens.     <u>902</u> |

↓

| |
|---|
| Determine addressees of answers.     <u>904</u> |

↓

| |
|---|
| Join committed tokens into compiled token.     <u>906</u> |

↓

| |
|---|
| Address compiled token to target answer.     <u>908</u> |

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 107146318

- RU 2018103253

### Non-patent literature cited in the description

- **MAXWELL, G.** ; **POELSTRA A**. *Borromean Ring Signatures*, 2015, https://github.com/- Blockstream/- borromean paper/raw/master/borromean draft 0.01 9ade1e49.pdf

- **RUFFING** ; **MORENO-SANCHEZ**. *Mixing Confidential Transactions: Comprehensive Transaction Privacy for Bitcoin*, 2017, http://eprint.iacr.org/2017/238. pdf